Europäisches Patentamt

European Patent Office

Office européen des brevets

(19)

(11) Numéro de publication : **0 373 026 B1**

(12) **FASCICULE DE BREVET EUROPEEN**

(45) Date de publication du fascicule du brevet :
23.12.92 Bulletin 92/52

(51) Int. Cl.⁵ : **A23L 1/32,** A23L 1/05,
A23J 1/08, A21D 13/08

(21) Numéro de dépôt : **89403248.1**

(22) Date de dépôt : **23.11.89**

(54) **Procédé de préparation d'ovoproduits liquides.**

(30) Priorité : **28.11.88 FR 8815506**

(43) Date de publication de la demande :
**13.06.90 Bulletin 90/24**

(45) Mention de la délivrance du brevet :
**23.12.92 Bulletin 92/52**

(84) Etats contractants désignés :
**DE ES FR GB GR IT NL SE**

(56) Documents cités :
**EP-A- 0 103 427
EP-A- 0 149 517
DE-A- 2 344 057
PATENT ABSTRACTS OF JAPAN, vol. 7, no.
139(C-171)(1284), 17 Juin 1983; & JP-A-58 51
841 (Kewpie K.K.) 26.03.1983
PATENT ABSTRACTS OF JAPAN, vol. 8, no.
212 (C-244)(1649), 27 septembre 1984; & JP-
A-59 98 664 (Hausu Shiyokuhin KogyoK.K.)
07.06.1984**

(73) Titulaire : **EUROPE PROTEINES INDUSTRIES
BRETAGNE Société Anonyme
41, rue des Hauts Chemins
F-22360 Langueux (FR)**

(72) Inventeur : **Corlay, Yvon
Kérandivez Plouneventer
F-29230 Landivisiau (FR)**
Inventeur : **Causeret, Denis
29 Boulevard Carnot
F-21000 Dijon (FR)**
Inventeur : **Hutet, Thierry
Morieux
F-22400 Lamballe (FR)**

(74) Mandataire : **Bourgognon, Jean-Marie et al
Cabinet Flechner 22, Avenue de Friedland
F-75008 Paris (FR)**

## Description

La présente invention concerne les procédés de préparation d'ovoproduits liquides à base d'oeufs entiers, de blancs d'oeufs, de jaunes d'oeufs, notamment d'oeufs de poules, ou de liquides en contenant tels que des compositions pour gaufres ou crêpes.

A la demande de brevet japonais No 58 51841, on se propose de préparer une denrée stérilisée contenant du jaune d'oeuf en empêchant la coagulation du jaune pendant le procédé de préparation. Le procédé consiste à traiter le jaune d'oeuf par une enzyme, à savoir la trypsine. L'enzyme coupe les protéines du jaune d'oeuf. Pour favoriser l'action de l'enzyme, on règle le pH entre 7,0 et 8,0 et on porte à une température de 48 à 55°C, ce pH et cette température représentant les conditions les plus favorables à l'activité de l'enzyme. On obtient ainsi un hydrolysat qui n'est plus du jaune d'oeuf et qui ne coagule pas, même lorsqu'il est chauffé à une température supérieure à 100°C en vue d'être stérilisé.

Au brevet français No 2.367.435, on décrit, après rappel de l'art antérieur mettant en oeuvre une évaporation sous vide ou un traitement aux rayons ultraviolets, un procédé de traitement de produits d'oeufs liquides destiné à les stériliser sans trop les dénaturer. Ce procédé consiste à leur ajouter du sel ou du sucre en une quantité d'au moins 5 % ou 30 % jusqu'à l'obtention d'un poids osmotique d'au moins 20 atmosphères, à éliminer les gaz dissous jusqu'à l'obtention d'une teneur en oxygène inférieure a 3 ppm, notamment par chauffage, de préférence entre 50 et 65°C, sous un vide poussé, avec barbotage d'un gaz inerte. On obtient ainsi un ovoproduit liquide stérile et se conservant d'autant mieux qu'on lui fait subir éventuellement un traitement thermique de plusieurs jours entre 40 et 65°C.

Ce procédé est compliqué par son stade d'élimi-nation des gaz dissous sous vide et sous atmosphère protectrice. Ce procédé ne permet pas d'obtenir un ovoproduit liquide qui ne soit ni salé, ni sucré.

L'invention pallie ces inconvénients par un procédé de préparation d'ovoproduits liquides non dénaturés qui, tout en leur donnant une durée de conservation au froid (4°C) de plusieurs semaines, suffisante pour leur commercialisation, est bien plus simple et est soumis à moins de contraintes que les procédés antérieurs.

Le procédé consiste à casser des oeufs et à en recueillir au moins une partie liquide. Suivant l'invention, le procédé consiste à porter cette partie liquide entre 50 et 56°C et, de préférence, à 52°C environ, pendant 18 à 72 heures et, de préférence, pendant 48 heures et sans addition de trypsine, puis à la refroidir et à la stocker à une température inférieure à 4°C environ.

On a trouvé, d'une manière surprenante, que ce traitement thermique dans une plage de température étroitement délimitée, et notamment à 52°C environ, ne dénature pratiquement pas le produit et n'en provoque pas la coagu-lation même pendant la durée longue indiquée, comme on pouvait le craindre, puisque, comme le rappelle le brevet No 2.367.435, une simple pasteurisation pendant quelques minutes à la pression atmosphérique entraîne une dénaturation importante des constituants de l'oeuf lorsque la température de traitement atteint environ 54°C pour le blanc d'oeuf. Ce traitement thermique suivant l'invention a un effet de destruction de microorganismes qui permet de conserver le produit obtenu au froid pendant plusieurs semaines.

Suivant un perfectionnement de l'invention, garantissant encore mieux la destruction de microorganismes, le procédé consiste à porter la partie liquide entre 50 et 56°C pendant 18 à 72 heures, alors qu'elle est déjà dans un récipient étanche aux microorganismes.

Il est souhaitable de porter la partie liquide à la température indiquée pour le traitement thermique d'une manière homogène, et c'est pourquoi on préfère ne mettre la partie liquide dans le récipient étanche aux microorganismes qu'après l'avoir portée 2 minutes environ à une température de 50 à 55°C.

Lorsque l'on effectue le traitement thermique sur l'oeuf entier ou sur tout mélange de blanc et de jaune, on constate qu'à la fin de ce traitement et au refroidissement il se produit une ségrégation des phases qui nécessite, lors de l'utilisation ultérieure, d'agiter le produit. Pour ne pas avoir à effectuer cette opération, et pour que le produit apparaisse à l'utilisateur sous une forme parfaitement liquide, on propose, suivant l'invention, d'additionner la partie liquide de 0,2 à 1% en poids d'un agent dit épaississant. Ces agents dits épaissis-sants sont notamment des alginates, des gommes telles que de la gomme de xanthane, ou un extrait de graines de guar ou de caroube. Ces agents sont connus en soi comme agents épais-sissants ou gélifiants. Or, d'une manière inattendue, ajoutés à une partie liquide d'oeuf, ils ont un rôle de mise en suspension des parties solides susceptibles de se séparer. Ces agents, notamment les alginates, sont des substances hygroscopiques. Pour éviter leur hydratation prématurée avec formation de grumaux, on préfère les ajouter sous la forme d'une suspension dans une huile comestible, éventuellement d'origine animale, mais de préférence d'origine végétale telle que de l'huile de tournesol, de l'huile de coprah, de l'huile d'arachide, choisie pour son aptitude à ne pas se figer aux températures auxquelles le produit d'oeuf sera traité et stocké. On peut également mettre l'agent dit épaississant en solution dans de l'eau. Quand on utilise de l'huile, on en utilise au maximum 2 grammes par gramme d'agent épaississant, tandis qu'on utilise, de préférence, au moins 5 grammes d'eau pour 1 gramme de l'agent épaississant.

A la demande de brevet japonais No 57 208348, on prépare des oeufs cuits que l'on stérilise thermiquement à une température supérieure à 80°C. On propose, certes, pour favoriser le battage et l'incorporation d'air, afin d'augmenter la viscosité et de maintenir la texture aérée à la cuisson, d'ajouter un agent épaississant. Mais la fonction de cet agent épaississant, qui vient d'être rappelée ci-dessus, n'est pas du tout, comme suivant l'invention, d'empêcher une sédimentation dans un produit liquide.

Les exemples suivants illustrent l'invention.

## EXEMPLE 1

On plonge 25 oeufs de poule dans un bain d'eau chlorée a 0,4°Cl pendant 1 minute. On casse les oeufs manuellement et on recueille 1400 grammes d'oeuf liquide dans un saladier propre. On bat les oeufs en une omelette à l'aide d'un batteur ménager de marque Moulinex, type 686. On pèse à la balance analytique 7 grammes d'alginate de sodium, type Satialgine S60 que l'on met dans un flacon. On y verse 14 grammes d'huile de tournesol. On bouche le flacon et on l'agite vigoureusement pour bien disperser l'alginate dans l'huile. Avec le batteur, on crée un cône d'agitation dans l'omelette. On verse progressivement le mélange d'alginate et d'huile dans le cône. On continue à mélanger pendant 1 a 2 minutes. On pompe l'omelette à un débit de 0,5 litre/minute au moyen d'une petite pompe à piston. On fait passer l'omelette dans un serpentin de verre de 300 cm de longueur immergé dans un bain-marie à 70°C. La température de l'omelette passe ainsi de 20° à 54°C. On refoule directement l'omelette dans un flacon d'une capacité de 1 litre en polypropylène. Immédiatement après la fin du remplissage du flacon, on le stocke dans une étuve à 52°C. La température de l'étuve est réglée à ± 1°. 36 heures après, on refroidit le flacon en chambre froide à une température de +2°C.

Le produit obtenu est liquide. Il a une bonne qualité bactériologique et une bonne qualité organoleptique.

## EXEMPLE 2

On reprend l'exemple 1, si ce n'est que l'on introduit la suspension d'alginate de sodium dans l'huile après que la température de l'omelette a été portée à 54°C. On obtient des résultats analogues.

## EXEMPLE 3

On reprend l'exemple 1, si ce n'est que l'on ajoute aux oeufs battus en une omelette du sel, du sucre et des condiments. On obtient des résultats analogues à ceux de l'exemple 1.

## EXEMPLE 4

On reprend l'exemple 1, mais en ne traitant que du jaune d'oeuf et en n'introduisant pas d'alginate de sodium. On obtient un produit d'aspect liquide ayant une bonne qualité bactériologique et une bonne qualité organoleptique.

## EXEMPLE 5

On reprend l'exemple 1, si ce n'est que l'on contamine l'omelette par des bactéries, avant de la porter a 52°C pendant 24 heures, au lieu de 36 heures. On obtient les résultats indiqués au tableau I, ci-dessous.

## TABLEAU I

| Omelette contaminée en | Population initiale (germes/g de produit) | population après 24 h à 52°C (germes/g de produit) |
|---|---|---|
| Salmonella Saint-Paul | 33 150 000 | 0 |
| Salmonella Bredeney | 22 450 000 | 0 |
| Staphylocoque aureus | 590 000 | 0 |
| Staphylocoque saprophyticus | 5 300 000 | 0 |
| Escherichia coli | 35 000 | 0 |

Ce tableau montre l'efficacité du traitement thermique suivant l'invention pour la qualité bactériologique du produit.

EXEMPLE 6

On détermine la qualité bactériologique de l'ovoproduit liquide préparé à l'exemple 1, à des instants échelonnés dans le temps, pendant 33 jours. On obtient les résultats consignés au tableau II ci-dessous.

## TABLEAU II

| Durée conservation +4°C (jour) | J | J+5 | J+12 | J+19 | J+26 | J+33 |
|---|---|---|---|---|---|---|
| Coliformes totaux | 0 | 0 | 0 | 0 | 0 | 0 |
| Coliformes fécaux | 0 | 0 | 0 | 0 | 0 | 0 |
| Streptocoques fécaux | Abs | Abs | Abs | Abs | Abs | Abs |
| Levures | 0 | 0 | 0 | 0 | 0 | 0 |
| Moisissures | 0 | 0 | 0 | 0 | 0 | 0 |
| Flore mésophile | 10 | 10 | 300 | 1200 | 2300 | 3500 |

Le produit n'a pas de défauts organoleptiques. Le pH ne varie pas au cours du stockage et reste égal à 7,6.

Un échantillon stocké trois mois et demi à +4°C a une flore mésophile de 38 000 germes par gramme.

EXEMPLE 7

Pour mieux évaluer le rôle de la température du traitement thermique, on effectue des essais conformes à l'exemple 1, mais à des températures de 48°C, de 52°C (exemple 1), et de 55°C, après avoir contaminé les omelettes. La population initiale correspond à celle qui est présente à l'instant où les échantillons atteignent la température de consigne (flacons plongés dans un bain-marie et mis dans les cuves dès que la température de traitement chimique est atteinte).

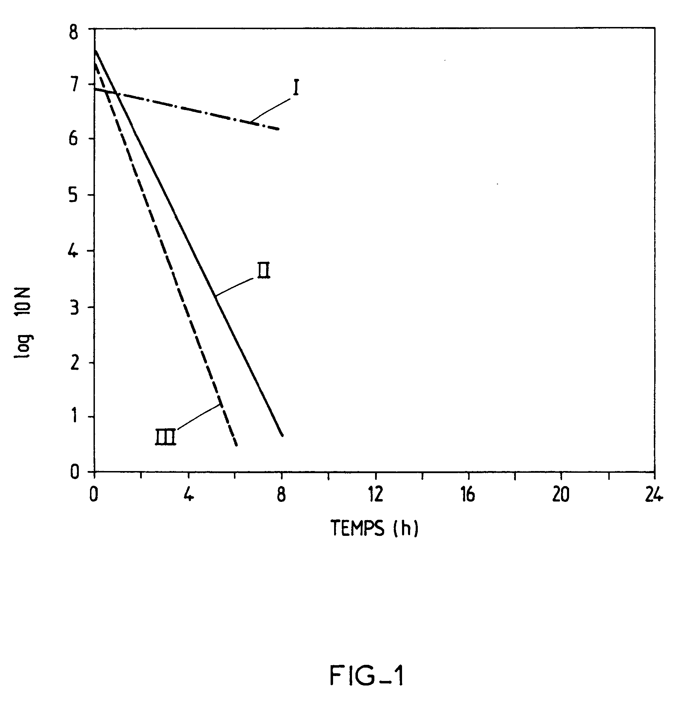

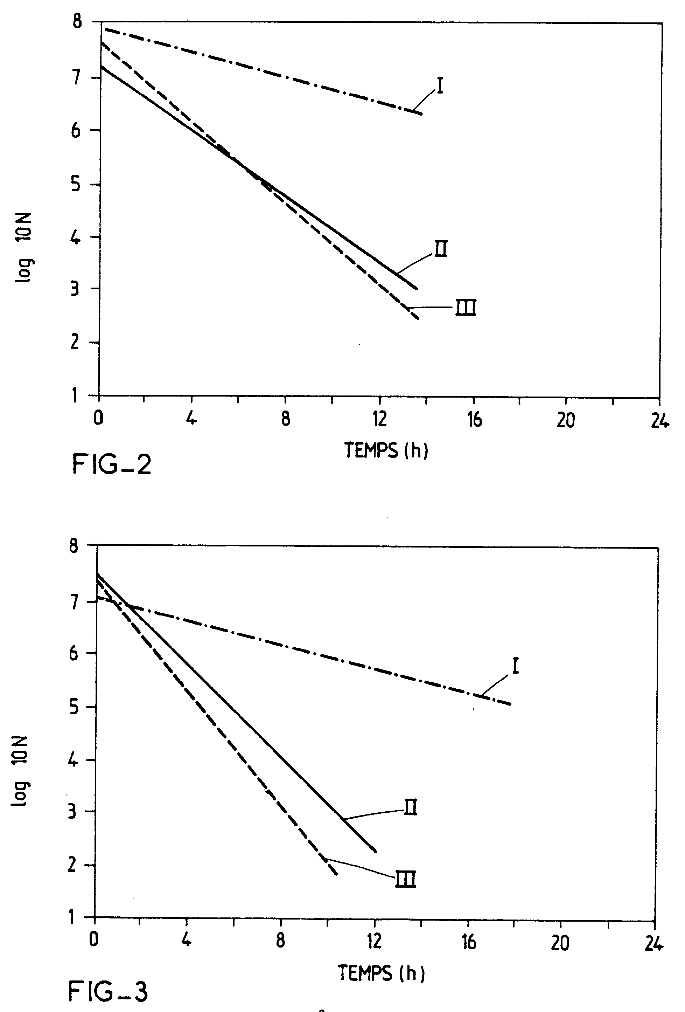

L'effet du traitement thermique a été testé sur une souche d'Escherichia coli et sur une couche de Salmonella Bredeney. Les essais concernant la flore totale mésophile ont porté sur de la coule crue laissée à la température ambiante pendant 24 heures. Aux figures 1, 2 et 3, on a porté en ordonnées le logarithme décimal de la population d'Escherichia coli, de Salmonella Bredeney et de la flore mésophile, respectivement, en fonction du temps. Les courbes I, II et III correspondent à des températures de traitement thermique de 48°C, 52°C et 55°C, respectivement.

Ces courbes montrent la très nette différence entre le traitement à 48°C, qui est trop modéré pour assurer une bonne qualité bactériologique du produit, et les traitements à 52°C et 55°C, qui assurent cette qualité bactériologique recherchée.

L'ovoproduit préparé par le procédé de l'invention peut être utilisé pour la préparation d'omelettes ou en tant qu'ingrédient dans la pâtisserie, dans la salaisonnerie, dans la fabrication de plats cuisinés ou de crèmes glacées.

## Revendications

1. Procédé de préparation d'ovoproduits liquides, qui consiste à casser des oeufs et à en recueillir au moins une partie liquide, caractérisé en ce qu'il consiste à porter cette partie liquide entre 50 et 56°C, pendant 18 à 72 heures et sans addition de trypsine, puis à la refroidir et à la stocker à une température inférieure à 4°C.

2. Procédé suivant la revendication 1, caractérisé en ce qu'il consiste à porter la partie liquide à 52°C environ pendant 18 à 72 heures et, de préférence, pendant 48 heures environ.

3. Procédé suivant la revendication 1 ou 2, caractérisé en ce qu'il consiste à porter la partie liquide entre 50 et 56°C pendant 18 à 72 heures, alors qu'elle est déjà dans un récipient étanche aux microorganismes.

4. Procédé suivant la revendication 3, caractérisé en ce qu'il consiste à mettre la partie liquide dans le récipient après l'avoir portée en deux minutes à une température de 50 à 55°C.

5. Procédé suivant l'une des revendications 1 à 4, caractérisé en ce qu'il consiste à additionner la partie liquide de 0,2 à 1 % en poids d'un agent dit épaississant, de préférence en suspension dans une huile comestible, notamment végétale, ou en solution dans de l'eau.

6. Procédé suivant la revendication 5, caractérisé en ce que l'agent dit épaississant est un alginate, de la gomme de xanthane, ou un extrait de graines de guar ou de caroube.


**Claims**

1. A process for preparing liquid egg products which comprises breaking eggs and collecting therefrom at least a liquid part, characterised in that said liquid part is kept between 50 and 56°C, for 18 to 72 hours and without adding trypsine, is then cooled and stored at a temperature below 4°C.

2. A process according to claim 1, characterized in that the liquid part is kept at about 52°C for 18 to 72 hours, and preferably for about 48 hours.

3. A process according to either claim 1 or 2, characterized in that the liquid part is kept between 50 and 56°C for 18 to 72 hours, while it is already in a microorganism-proof container.

4. A process according to claim 3, characterized in that the liquid part is placed in the container after its temperature has been raised within two minutes to 50 - 55°C.

5. A process according to any one of claims 1 to 4, characterized in that 0.2 to 1 wt. % of a so called thickening agent, preferably suspended in an edible oil, more particularly in a vegetable oil, or dissolved in water, is added to the liquid part.

6. A process according to claim 5, characterised in that the so called thickening agent is an alginate, xanthan gum or an extract of guar or carob grains.


**Patentansprüche**

1. Verfahren zur Herstellung flüssiger Eiprodukte, bei welchem die Eier zerschlagen und davon wenigstens ein flüssiger Teil aufgefangen wird, dadurch **gekennzeichnet,** dass dieser flüssige Teil während 18 bis 72 Stunden und ohne eine Zugabe von Trypsin zwischen 50 und 56°C gehalten, anschliessend abgekühlt und auf einer Temperatur niedriger als 4°C gelagert wird.

2. Verfahren nach Anspruch 1, dadurch **gekennzeichnet,** dass der flüssige Teil bei 52°C etwa zwischen 18 und 72 Stunden, vorzugsweise etwa 48 Stunden gehalten wird.

3. Verfahren nach Anspruch 1 oder 2, dadurch **gekennzeichnet,** dass der flüssige Teil während 18 bis 72 Stunden zwischen 50 und 56°C gehalten wird, während sich dieser Teil schon in einem gegenüber Mikroorganismen dichten Behälter befindet.

4. Verfahren nach Anspruch 3, dadurch **gekennzeichnet,** dass der flüssige Teil in den Behälter gegeben wird, nachdem seine Temperatur innerhalb zwei Minuten auf 55 bis 55°C gesteigert wurde.

5. Verfahren nach einem der Ansprüche 1 bis 4, dadurch
**gekennzeichnet,** dass dem flüssigen Teil 0,2 bis 1 Gew.-% eines sogenannten Verdickungsmittels, vorzugsweise in Suspension mit einem essbaren, insbesondere pflanzlichen Öl oder in wässriger Lösung zugegeben wird.

6. Verfahren nach Anspruch 5, dadurch
**gekennzeichnet,** dass das sogenannte Verdickungsmittel ein Alginat des Xanthengummis oder ein Extrakt aus Samen des Guars (Kleegewächs) oder des Johannisbrots ist.

FIG_1

FIG_2

FIG_3